# EUROPÄISCHE PATENTSCHRIFT

(11) **EP 1 169 202 B1**
(45) Veröffentlichungstag und Bekanntmachung des Hinweises auf die Patenterteilung: **03.09.2003**
(21) Anmeldenummer: 00917049.9
(22) Anmeldetag: 05.04.2000
(51) Int. Cl.: B60T 8/36, G01L 19/00

(54) **ANORDNUNG ZUR MESSUNG EINES FLUIDDRUCKS**
DEVICE FOR MEASURING THE PRESSURE OF A FLUID
DISPOSITIF POUR MESURER UNE PRESSION DE FLUIDE

(30) Priorität: 09.04.1999 DE 19916087
(43) Veröffentlichungstag der Anmeldung: 09.01.2002
(73) Patentinhaber: LUCAS INDUSTRIES PUBLIC LIMITED COMPANY, Solihull B90 4LA (GB)
(72) Erfinder: GEGALSKI, Helmut, D-56218 Mühlheim-Kärlich (DE)
(74) Vertreter: Schmidt, Steffen J., Dipl.-Ing.
(86) Internationale Anmeldenummer: EP0003028
(87) Internationale Veröffentlichungsnummer: WO00061414

(56) Entgegenhaltungen:
- EP-A- 1 016 573
- WO-A-00/30909
- WO-A-96/33081
- US-A- 2 935 292
- US-A- 3 375 802
- US-A- 5 402 824

## Beschreibung

### Hintergrund der Erfindung

Die vorliegende Erfindung betrifft eine Anordnung zur Messung eines Fluiddrucks. Insbesondere geht es bei der Erfindung um Drucksensoren, die direkt in einer Hydraulikanlage bzw. einem Hydrauliksteuergerät zum Beispiel einer Fahrzeugbremsanlage angeordnet sind.

### Stand der Technik

Aus der betrieblichen Praxis ist es bekannt, Drucksensoren in eine Bohrung oder Ausnehmung in einem unter anderem Ventilanordnungen enthaltenden Hydrauliksteuergerät zu montieren, indem diese Drucksensoren ein Außengewinde aufweisen, das in ein entsprechendes Innengewinde eingeschraubt wird, das in der Bohrung oder Ausnehmung vorgesehen ist. Diese Vorgehensweise ist in der Herstellung aufwendig, erfordert Montagezeit und ermöglicht es überdies nicht, den Drucksensor direkt mit einem Steuerschaltkreis auf einer Platine elektrisch und mechanisch zu verbinden, die an das Hydrauliksteuergerät angefügt wird.

Als Alternative zu diesem Stand der Technik ist es auch bekannt, den Drucksensor in die Bohrung oder Ausnehmung einzurasten, indem in einer am Außenumfang des Drucksensors angeordneten Ringnut ein Federring, Sprengring oder dergl. vorgespannt ist, der in eine entsprechende gegengleich geformte Ringnut in der Bohrung oder Ausnehmung einrastet, sobald der Drucksensor tief genug in die Bohrung oder Ausnehmung eingeschoben wird. Zum einen ist eine Demontage zu Wartungszwecken sehr schwierig, da der Sprengring dazu dimensioniert sein muß, hohe Druck-Kräfte von mehreren zehn Bar (60 bis 120 Bar) halten zu können. Zum anderen ist eine in Montagerichtung spielfreie Halterung des Drucksensors in der Bohrung oder Ausnehmung mittels eines Sprengrings nur schwierig realisierbar. Dies wäre jedoch notwendig, um die Zug- oder Schubbelastungen des Drucksensors auf die Platine mit dem Steuerschaltkreis zu vermeiden.

Auch wenn der Drucksensor über einen Steckverbinder oder Steck-Kontakt mit der Platine verbunden ist, können axiale Verschiebungen vom mehr als 50 µm im Betrieb zu einem Ansteigen des Übergangswiderstandes auf mehrere Ohm und somit zu einer erheblichen Verfälschung des gemessenen Fluiddrucks oder gar zum Ausfall des Steckverbinders bzw. des Drucksensors führen.

DE-GM 1 879 755 beschreibt eine Meßbereich-Umschaltvorrichtung für die Messung von Flüssigkeits- oder Gasdrücken, bei der ein zylinderförmiger Steuerschieber in einem Gehäuse axial verschiebbar ist. An einem axialen Ende des Gehäuses wird einem Druckraum Medium zugeführt, das zu radialen Bohrungen im Gehäuse geleitet wird. Im Steuerschieber sind Steuerschlitze ausgebildet, die bei einer bestimmten Stellung des Steuerschiebers eine der Bohrungen mit einem Manometer verbinden. Axial gegenüberliegende Flächen der Steuerschlitze sind gleichgroß ausgestaltet. Ziel ist es, bei steigendem bzw. fallendem Druck ein Manometer nach dem anderen ab- bzw. zuzuschalten.

Aus DE 40 12 619 A1 ist eine fahrbare Einrichtung zum Orten von Leckstellen in Abwasserkanälen bekannt, die zwei Doppelwände zur Abdichtung einer Druckkammer aufweist. Die Druckkammer wird durch eine axiale Zuleitung mit Wasser gefüllt, dessen Druckabfall gemessen wird, um die Leckstelle zu bestimmen. Die Einrichtung wird schrittweise durch den Abwasserkanal bewegt.

Die US 5 402 824 beschreibt ein Magnetventil mit einem zylindrischen Gehäuse, das im Inneren einer Ausnehmung angeordnet ist, wobei der Außendurchmesser des Gehäuses im wesentlichen dem Innendurchmesser der Ausnehmung entspricht. Um eine luftdichte Versiegelung des Gehäuses in der Ausnehmung zu gewährleisten, sind am Außenumfang des Gehäuses mehrere O-Ringe angeordnet. In dem Gehäuse befinden sich zwei jeweils zylinderförmige Druckkammern, die jeweils mit einer Hydraulikleitung zum Ein- bzw. Auslaß von Hydraulikfluid verbunden sind. Senkrecht zu einer Längsachse ausgerichtete und einander gegenüberliegende Flächen des Gehäuses und der O-Ringe, die mit einem Fluiddruck beaufschlagt werden, weisen jeweils gleiche Abmessungen auf.

### Der Erfindung zugrundeliegendes Problem

Ausgehend vom vorstehendbeschriebenen Stand der Technik liegt der Erfindung die Aufgabe zugrunde, eine Anordnung zur Messung eines Fluiddrucks bereitzustellen, die eine einfache (De-)Montage in minimaler Zeit erlaubt und die im Betrieb keine Zug- oder Schubbelastungen auf einen Steckverbinder oder eine Platine mit einem Steuerschaltkreis hervorruft, mit dem die Anordnung verbunden ist.

### Erfindungsgemäße Lösung

Zur Lösung dieses Problems schlägt die Erfindung eine Anordnung zur Messung eines Fluiddrucks gemäß dem Anspruch 1 vor.

Dabei kommt die zur Erfindung gehörende Erkenntnis zum Tragen, daß der Abschnitt mit dem Drucksensor als ein Körper mit bezogen auf seine Längsachse seitlich abstehenden Flächen zu gestalten ist, wobei die Summe von zur Längsachse orthogonalen Projektionen von Flächen, die im wesentlichen in eine erste Richtung orientiert sind und im Betrieb durch Fluid benetzt sind, dessen Druck zu messen ist, im wesentlichen gleich groß oder kleiner ist als die Summe von zur Längsachse orthogonalen Projektionen von Flächen, die im wesentlichen in eine zur ersten Richtung entgegengesetzte zweite Richtung orientiert sind und im Betrieb durch Fluid benetzt sind, dessen Druck zu messen ist.

Damit wird erreicht, daß bei gleichen Flächeninhalten im Betrieb der Abschnitt mit dem Drucksensor praktisch kraft- oder druckausgeglichen in der Ausnehmung aufgenommen ist. Dabei wird im Gegensatz zu der in DE-GM 1 879 755 beschriebenen Vorrichtung der Abschnitt bei steigendem Druck jedoch nicht verschoben. Bei einem geringfügigen Ungleichgewicht zugunsten der Flächen, die in Richtung der Einführ-Seite oder -Öffnung der Ausnehmung weisen wird erreicht, daß mit steigendem Druck der Abschnitt immer fester in Richtung des Grundes der Ausnehmung gepreßt wird. Dies erhöht die Eigensicherheit der Anordnung und ist außerdem ein wichtiger Unterschied zu Anordnungen aus dem Stand der Technik, bei denen ein (steigender) Fluiddruck üblicherweise das Bestreben hat, die Drucksensoren in der Regel aus ihren Montagebohrungen herauszudrängen.

Weiterhin kann der Drucksensorabschnitt einfach in die Ausnehmung eingeschoben werden, was geringe Montagezeiten ermöglicht. Auch die Demontage ist sehr schnell und einfach möglich, da keine Sprengringe den Drucksensorabschnitt halten. Vielmehr ist der Drucksensorabschnitt im Dichtsitz gleitend in der Ausnehmung aufgenommen und kann ohne weiteres aus der Ausnehmung heraus oder in die Ausnehmung hineingeführt werden.

Insbesondere erlaubt die erfindungsgemäße Ausgestaltung auch auf einfache Weise, daß wenn mehrere in einem Hydraulikaggregat vorhandene Drucksensoren alle auf der gleichen Platine montiert sind um gleichzeitig (quasi mit einem Handgriff) an das Hydrauliksteuergerät angefügt zu werden.

### Vorteilhafte Weiterbildungen der Erfindung

In einer bevorzugten Ausführungsform der Erfindung sind an dem Drucksensorabschnitt befindliche und von Fluid berührte erste und zweite Flächen so bemessen und ausgerichtet sind, daß von dem Fluiddruck auf die ersten Flächen ausgeübte Kräfte, die den Drucksensorabschnitt in Richtung der offenen Seite der Ausnehmung drängen, gleich groß sind wie die von dem Fluiddruck auf die zweiten Flächen ausgeübten Kräfte, die den Drucksensorabschnitt von der offenen Seite der Ausnehmung weg drängen. Damit führt während des Betriebes des Drucksensors der Drucksensorabschnitt keinerlei Bewegungen in axialer Richtung aus. Somit kann der Drucksensorabschnitt problemlos mit einer an dem Hydrauliksteuergerät anzufügenden Platine elektrisch und mechanisch verbunden werden, sei es, daß er direkt angelötet oder angeschweißt, oder über eine Steckverbindung kontaktiert wird. Im Betrieb werden von dem Drucksensorabschnitt keine mechanischen (Zug- oder Schub-) Belastungen auf die elektrische Verbindung bzw. die Platine ausgeübt.

Bevorzugt sind die ersten Flächen und die zweiten Flächen bezogen auf eine Mittelebene symmetrisch zueinander. Dies gilt insbesondere wenn der Drucksensorabschnitt einen kreiszylindrischen Grundkörper aufweist, von dem diese ersten Flächen und zweiten Flächen radial oder unter einem gegengleichen Winkel (bezogen auf eine zur Mittellängsachse rechtwinklige Ebene) abstehen.

In einer derzeit bevorzugten Ausführungsform hat der Drucksensorabschnitt in einem mittleren Bereich einen ersten Bund mit einer im wesentlichen geschlossenen Mantelfläche und einer ersten Deckfläche und einer zweiten Deckfläche, und wobei die erste Deckfläche und die zweite Deckfläche im wesentlichen gleiche Flächeninhalte haben. In axialen Abständen zu der ersten und der zweiten Deckfläche des ersten Bundes jeweils ein zweiter und ein dritter Bund angeordnet sind, deren Außenabmessungen so bemessen sind, daß der zweite und der dritte Bund zur Führung des Drucksensorabschnittes in der Ausnehmung beitragen und jeweils dem ersten Bund zugewandte Deckflächen aufweisen, die im wesentlichen gleiche Flächeninhalte haben.

Zwischen dem ersten Bund und dem zweiten Bund und/oder zwischen dem ersten Bund und dem dritten Bund ist jeweils eine Dichtung angeordnet.

Zusätzlich kann der Drucksensorabschnitt durch ein Haltemittel, bevorzugt einen Sprengring, in der Ausnehmung gesichert sein.

Bevorzugt ist der Drucksensorabschnitt so bemessen und in der Ausnehmung so angeordnet, daß der erste Bund einem in der Wandung der Ausnehmung angeordneten Fluideinlaß zugewandt ist. Dabei ist es nicht zwingend erforderlich, daß in montiertem Zustand des Drucksensorabschnitts dieser sich "auf gleicher Höhe" mit dem in der Wandung der Ausnehmung angeordneten Fluideinlaß befindet. Vielmehr sollte lediglich sichergestellt sein, daß beim Einströmen von Fluid in die Ausnehmung dieses nicht zuerst auf eine der ersten oder zweiten Flächen trifft. Dadurch sollte das Fluid diese Flächen praktisch gleichzeitig erreichen, damit der Drucksensorabschnitt sich nicht in axialer Richtung bewegt wenn das Fluid einströmt.

In einer besonders einfach herzustellenden Ausführungsform der Erfindung hat der Drucksensorabschnitt eine zu seiner Mittellängsachse rotationssymmetrische Gestalt.

Vorzugsweise hat der Drucksensorabschnitt im Bereich des ersten Bundes einen Drucksensor. Dabei kann es sich um einen Halbleiter-Drucksensor handeln.

Bei der Erfindung ist es auch möglich, daß außerhalb des zweiten und/oder dritten Bundes Umgebungsatmosphärendruck herrscht. Mit anderen Worten ist der Drucksensorabschnitt nur zwischen dem zweiten und dem dritten Bund von druckbeaufschlagtem Fluid (dessen Druck zu messen ist) umgeben. In axialer Richtung weiter außen liegende Bereiche des Drucksensorabschnitts können - durch den zweiten und/oder dritten Bund bzw. die entsprechenden Dichtungen begrenzt - in druckloser Umgebungsatmosphäre sich befinden.

In einer bevorzugten Ausführungsform hat der Drucksensorabschnitt und/oder zumindest einzelne der ersten, zweiten oder dritten Bunde eine zylindrische oder konische, bevorzugt kreiszylindrische oder kreiskonische Gestalt.

Die zwischen dem ersten Bund und dem zweiten Bund oder zwischen dem ersten Bund und dem dritten Bund angeordneten Dichtungen sind vorzugsweise so beschaffen, daß sie sich im Betrieb wie ein - inkompressibles - Fluid verhalten, wenn sie sich gegen die entsprechenden Flächen an dem Drucksensorabschnitt anlegen. Damit ist sichergestellt, daß keine Verfälschung der Messung durch nachgiebige Dichtungen eintritt. Eine weitere Eigenschaft der Dichtungen sollte sein, daß die im Betrieb von dem Fluid bedeckten oder benetzten Bereiche der Dichtungen im wesentlichen gegengleich sind. Hierfür gelten die gleichen Gründe und Bemessungsregeln wie für die ersten und zweiten Flächen des Drucksensorabschnitts.

Der Drucksensor wird damit durch einen Drucksensorabschnitt gebildet, der von der Wandung der Ausnehmung in fluiddichter Weise umgeben ist, wobei der Drucksensorabschnitt zwei Dichtelemente (die zweiten und dritten Bunde oder entsprechende Dichtungen) hat, die gegengleiche Dichtflächen haben. Zwischen den zweiten und dritten Bunden oder den entsprechenden Dichtungen wird seitlich in einen Einlaß in der Wandung der Ausnehmung das Fluid eingeleitet, dessen Fluiddruck zu messen ist.

### Kurze Beschreibung der Zeichnungen

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert.

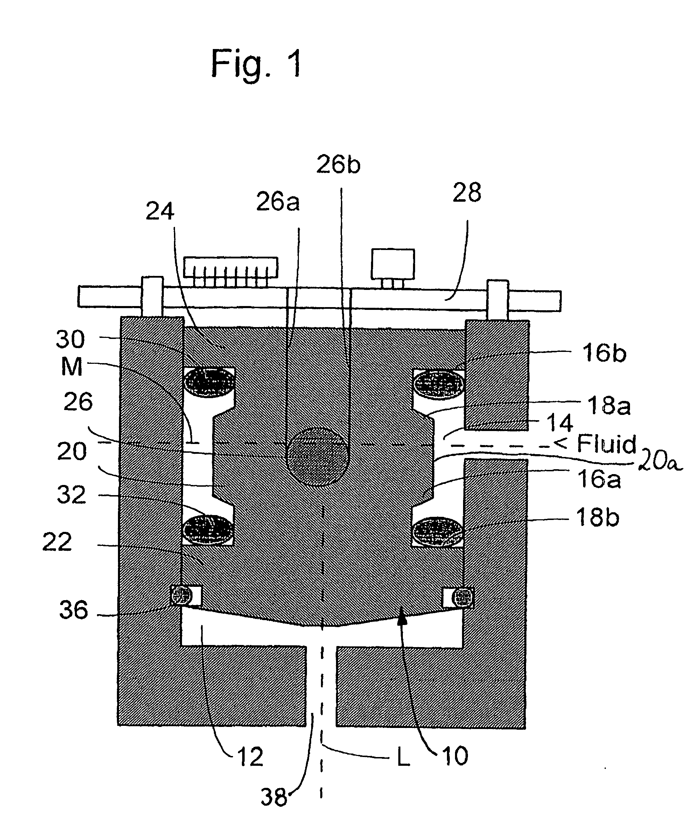

Fig. 1 zeigt eine schematische Schnitt-Darstellung der erfindungsgemäßen Anordnung zur Messung eines Fluiddrucks.

### Detaillierte Beschreibung der Ausführungsform

Die in Fig. 1 gezeigte Anordnung zur Messung eines Fluiddrucks ist Teil eines - im übrigen nicht weiter dargestellten - Hydrauliksteuergerätes einer Fahrzeugbremsanlage. Ein im wesentlichen zylindrischer Drucksensorabschnitt 10 ist in einer Ausnehmung 12 aufgenommen.

Dabei ist der Drucksensorabschnitt 10 im Verhältnis zu der Ausnehmung 12 so bemessen und geformt, daß den Drucksensorabschnitt 10 ein Zwischenraum 14 zur Aufnahme von Fluid umgibt. Wie dies im einzelnen realisiert ist, wird nachstehend beschrieben.

Der im wesentlichen zylindrische Drucksensorabschnitt 10 hat einen länglichen Körper mit bezogen auf seine Mittel-Längsachse L seitlich abstehenden Flächen 16a, 16b, 18a, 18b. Diese seitlich abstehenden Flächen 16a, 16b, 18a, 18b sind Teile von einem ersten, einem zweiten und einem dritten Ringbund 20, 22, 24. Der erste Ringbund 20 ist in einem etwa mittleren Bereich bezogen auf die Gesamtlänge des zylindrischen Drucksensorabschnittes 10 einstückig an diesen angeformt und weist eine im wesentlichen geschlossene Mantelfläche 20a, eine erste Deckfläche 16a und eine zweite Deckfläche 18a auf, wobei die erste Deckfläche 16a und die zweite Deckfläche 18a im wesentlichen gleiche Flächeninhalte und - bezogen auf die Mittelebene M gleiche Projektionsflächen - haben.

Der Drucksensorabschnitt 10 ist in der Ausnehmung 12 so angeordnet, daß der erste Bund 20 einem in der Wandung der Ausnehmung 12 angeordneten Fluideinlaß für das Fluid zugewandt ist, dessen Druck zu messen ist. Der Drucksensorabschnitt 10 hat im Bereich des ersten Bundes 20 einen Drucksensor 26. Dieser Drucksensor ist über zwei Drähte 26a, 26b mit einer elektronischen Schaltung verbunden, die sich auf einer Platine 28 oberhalb des Drucksensorabschnittes 10 befindet. Die Drähte 26a, 26b können entsprechend dimensioniert auch dazu dienen, den Drucksensorabschnitt 10 insgesamt an der Platine 28 mechanisch zu halten. Dies erleichtert insbesondere die Montage.

In axialen Abständen zu der ersten und der zweiten Deckfläche 16a, 18a des ersten Bundes 20 sind jeweils der zweite 22 und der dritte Bund 24 angeordnet. Deren Außenabdurchmesser sind so bemessen, daß der zweite und der dritte Bund 22, 24 zur Führung des Drucksensorabschnittes 10 in der Ausnehmung 12 im Dichtsitz beitragen. Der zweite und der dritte Bund 22, 24 haben jeweils dem ersten Bund 20 bzw. dessen Deckflächen 16a, 18a zugewandte Deckflächen 18b, 16b, die ebenfalls im wesentlichen gleiche Flächeninhalte haben.

Die Summe von zur Längsachse L orthogonalen Projektionen der Deckflächen 16a, 16b die im wesentlichen in eine erste Richtung (nämlich in Fig. 1 nach unten) orientiert sind und im Betrieb durch Fluid benetzt sind, dessen Druck zu messen ist, ist im wesentlichen gleich groß wie die Summe der zur Längsachse orthogonalen Projektionen der Deckflächen 18a, 18b die im wesentlichen in eine zur ersten Richtung entgegengesetzte zweite Richtung (nämlich in Fig. 1 nach oben) orientiert sind und im Betrieb durch Fluid benetzt sind.

Daher sind die von dem Fluiddruck auf die ersten Flächen 16a, 16b ausgeübten Kräfte, die den Drucksensorabschnitt 10 in Richtung der offenen Seite (in Fig. 1 nach oben) der Ausnehmung 12 drängen, gleich groß wie die von dem Fluiddruck auf die zweiten Flächen 18a, 18b ausgeübten Kräfte, die den Drucksensorabschnitt 10 von der offenen Seite der Ausnehmung 12 weg (in Fig. 1 nach unten) drängen.

Zwischen dem ersten Bund 20 und dem zweiten Bund 22 und zwischen dem ersten Bund 20 und dem dritten Bund 24 ist jeweils eine Dichtung 30, 32 angeordnet. Diese Dichtungen sind so beschaffen, daß sie sich im Betrieb wie ein Fluid verhalten, wenn sie sich gegen die entsprechenden Flächen an dem Drucksensorabschnitt 10 anlegen. Des weiteren ist der Drucksensorabschnitt 10 durch einen Sprengring 36 in der Ausnehmung 12 gegen Herausfallen aus der Ausnehmung 12 gesichert. Außerhalb des zweiten und dritten Bundes 22, 24 kann Umgebungsatmosphärendruck herrschen. Dies wird auch dadurch erreicht, daß im Grund der Ausnehmung 12 eine Öffnung 38 vorgesehen ist, die die Ausnehmung 12 mit der Umgebung verbindet.

## Patentansprüche

1. Anordnung zur Messung eines Fluiddrucks, mit
- einem Abschnitt (10), der zur Aufnahme in
- einer wenigstens an einer Seite offenen Ausnehmung (12) eingerichtet ist, wobei der Abschnitt (10) im Verhältnis zu der Ausnehmung (12) *so* zu bemessen ist, daß
- den Abschnitt (10) ein Zwischenraum (14) zur Aufnahme von Fluid umgibt, dem ein in einer Wandung der Ausnehmung (12) angeordneter Fluideinlaß zugeordnet ist, wobei
- an dem Abschnitt (10) befindliche und von Fluid berührte erste und zweite Flächen (16a, 16b, 18a, 18b) so bemessen und ausgerichtet sind, daß von dem Fluiddruck auf die ersten Flächen (16a, 18a) ausgeübte Kräfte, die den Abschnitt (10) in Richtung der offenen Seite der Ausnehmung (12) drängen, gleich groß oder kleiner sind als von dem Fluiddruck auf die zweiten Flächen (16b, 18b) ausgeübte Kräfte, die den Abschnitt (10) von der offenen Seite der Ausnehmung (12) weg drängen, wobei
- der Abschnitt (10) einen Drucksensor (26) trägt.

2. Anordnung zur Messung eines Fluiddrucks nach Anspruch 1, wobei
- an dem Drucksensorabschnitt (10) befindliche und von Fluid berührte erste und zweite Flächen (16a, 18a) so bemessen und ausgerichtet sind, daß von dem Fluiddruck auf die ersten Flächen (16a, 18a) ausgeübte Kräfte, die den Drucksensorabschnitt (10) in Richtung der offenen Seite der Ausnehmung (12) drängen, gleich groß sind wie die von dem Fluiddruck auf die zweiten Flächen (16b, 18b) ausgeübten Kräfte, die den Drucksensorabschnitt (10) von der offenen Seite der Ausnehmung (12) weg drängen.

3. Anordnung zur Messung eines Fluiddrucks nach Anspruch 2, wobei
- die ersten Flächen (16a, 18a) und die zweiten Flächen (16b, 18b) bezogen auf eine Mittelebene (M) symmetrisch zueinander sind.

4. Anordnung zur Messung eines Fluiddrucks nach einem der vorhergehenden Ansprüche, wobei
- der Drucksensorabschnitt (10) in einem mittleren Bereich einen ersten Bund (20) mit einer im wesentlichen geschlossenen Mantelfläche und einer ersten Deckfläche (16a) und einer zweiten Deckfläche (18a) hat, und wobei die erste Deckfläche (16a) und die zweite Deckfläche (18a) und bezogen auf eine Mittelebene (M) im wesentlichen gleiche Projektionsflächeninhalte haben.

5. Anordnung zur Messung eines Fluiddrucks nach dem vorhergehenden Anspruch, wobei
- in axialen Abständen zu der ersten und der zweiten Deckfläche (16a, 18a) des ersten Bundes (20) jeweils ein zweiter und ein dritter Bund (22, 24) angeordnet sind, deren Außenabmessungen so bemessen sind, daß der zweite und der dritte Bund zur Führung des Drucksensorabschnittes (10) in der Ausnehmung (12) beitragen und jeweils dem ersten Bund (20) zugewandte Deckflächen (16b, 18b) aufweisen, die bezogen auf eine Mittelebene (M) im wesentlichen gleiche Projektionsflächeninhalte haben.

6. Anordnung zur Messung eines Fluiddrucks nach dem vorhergehenden Anspruch, wobei
- zwischen dem ersten Bund (20) und dem zweiten Bund (22) und/oder zwischen dem ersten Bund (20) und dem dritten Bund (24) jeweils eine Dichtung (30, 32) angeordnet ist.

7. Anordnung zur Messung eines Fluiddrucks nach einem der vorhergehenden Ansprüche, wobei
- der Drucksensorabschnitt (10) durch ein Haltemittel, bevorzugt einen Sprengring (36) in der Ausnehmung (12) gesichert ist.

8. Anordnung zur Messung eines Fluiddrucks nach einem der Ansprüche 4 bis 7, wobei
- der Drucksensorabschnitt (10) in der Ausnehmung (12) so angeordnet ist, daß der erste Bund (20) dem in der Wandung der Ausnehmung (12) angeordneten Fluideinlaß zugewandt ist.

9. Anordnung zur Messung eines Fluiddrucks nach einem der vorhergehenden Ansprüche, wobei
- der Drucksensorabschnitt (10) eine zu seiner Mittelachse (L) rotationssymmetrische Gestalt aufweist.

10. Anordnung zur Messung eines Fluiddrucks nach einem der Ansprüche 4 bis 9, wobei
- der Drucksensorabschnitt (10) den Drucksensor (26) im Bereich des ersten Bundes (20) hat.

11. Anordnung zur Messung eines Fluiddrucks nach einem der Ansprüche 5 bis 10, wobei
- außerhalb des zweiten und/oder dritten Bundes (22, 24) Umgebungsatmosphärendruck herrscht.

12. Anordnung zur Messung eines Fluiddrucks nach einem der Ansprüche 5 bis 11, wobei
- der Drucksensorabschnitt und/oder zumindest einzelne Abschnitte der ersten, zweiten oder dritten Bunde (20, 22, 24) eine zylindrische oder konische, bevorzugt kreiszylindrische oder kreiskonische Gestalt aufweisen.

13. Anordnung zur Messung eines Fluiddrucks nach einem der Ansprüche 5 bis 12, wobei
- zwischen dem ersten Bund (20) und dem zweiten Bund (22) oder zwischen dem ersten Bund (20) und dem dritten Bund (24) angeordnete Dichtungen (30, 32) so beschaffen sind, daß sie sich im Betrieb wie ein Fluid verhalten, wenn sie sich gegen die entsprechenden Flächen (16b, 18b) an dem Drucksensorabschnitt (10) anlegen.

14. Anordnung zur Messung eines Fluiddrucks nach einem der vorhergehenden Ansprüche, wobei
- ein Drucksensorabschnitt (10) ein länglicher Körper mit bezogen auf seine Längsachse (L) seitlich abstehenden Flächen (16a, 16b, 18a, 18b) ist, wobei die Summe von zur Längsachse (L) orthogonalen Projektionen von Flächen (16a) die im wesentlichen in eine erste Richtung orientiert sind und im Betrieb durch Fluid benetzt sind, dessen Druck zu messen ist, im wesentlichen gleich groß oder kleiner ist als die Summe von zur Längsachse orthogonalen Projektionen von Flächen (18a), die im wesentlichen in eine zur ersten Richtung entgegengesetzte zweite Richtung orientiert sind und im Betrieb durch Fluid benetzt sind, dessen Druck zu messen ist.

## Claims

1. An arrangement for measuring a fluid pressure, comprising
- a portion (10) devised for accommodation in
- a recess (12), which is open at least at one side, wherein the portion (10) in relation to the recess (12) is to be so dimensioned that
- the portion (10) is surrounded by a gap (14) for receiving fluid, with which gap a fluid inlet disposed in a wall of the recess (12) is associated, wherein
- first and second surfaces (16a, 16b, 18a, 18b), which are situated on the portion (10) and in contact with fluid, are so dimensioned and aligned that forces, which are exerted by fluid pressure on the first surfaces (16a, 18a) and push the portion (10) in the direction of the open side of the recess, are equal to or lower than forces, which are exerted by the fluid pressure on the second surfaces (16b, 18b) and push the portion (10) away from the open side of the recess (12), wherein
- the portion (10) carries a pressure sensor (26).

2. The arrangement for measuring a fluid pressure according to claim 1, wherein
- first and second surfaces (16a, 18a), which are situated on the pressure sensor portion (10) and in contact with fluid, are so dimensioned and aligned that forces, which are exerted by the fluid pressure on the first surfaces (16a, 18a) and push the pressure sensor portion (10) in the direction of the open side of the recess (12), are equal to the forces, which are exerted by the fluid pressure on the second surfaces (16b, 18b) and push the pressure sensor portion (10) away from the open side of the recess (12).

3. The arrangement for measuring a fluid pressure according to claim 2, wherein
- the first surfaces (16a, 18a) and the second surfaces (16b, 18b) are, in relation to a centre plane (M), symmetrical to one another.

4. The arrangement for measuring a fluid pressure according to one of the preceding claims, wherein
- the pressure sensor portion (10) in a middle region has a first collar (20) with a substantially closed lateral surface and a first end surface (16a) and a second end surface (18a), and wherein the first end surface (16a) and the second end surface (18a) and in relation to a centre plane (M) have substantially identical projected areas.

5. The arrangement for measuring a fluid pressure according to the preceding claim, wherein
- disposed at axial distances from the first and the second end surface (16a, 18a) of the first collar (20) are a second and a third collar (22, 24), the external dimensions of which are such that the second and the third collar help to guide the pressure sensor portion (10) in the recess (12) and have end surfaces (16b, 18b), which each face the first collar (20) and in relation to a centre plane (M) have substantially identical projected areas.

6. The arrangement for measuring a fluid pressure according to the preceding claim, wherein
- disposed between the first collar (20) and the second collar (22) and/or between the first collar (20) and the third collar (24) is in each case a seal (30, 32).

7. The arrangement for measuring a fluid pressure according to one of the preceding claims, wherein
- the pressure sensor portion (10) is secured in the recess (12) by a retaining means, preferably a snap ring (36).

8. The arrangement for measuring a fluid pressure according to one of claims 4 to 7, wherein
- the pressure sensor portion (10) is disposed in the recess (10) in such a way that the first collar (20) faces the fluid inlet disposed in the wall of the recess (12).

9. The arrangement for measuring a fluid pressure according to one of the preceding claims, wherein
- the pressure sensor portion (10) has a shape, which in relation to its centre line (L) is rotationally symmetrical.

10. The arrangement for measuring a fluid pressure according to one of claims 4 to 9, wherein
- the pressure sensor portion (10) has a pressure sensor (26) in the region of the first collar (20).

11. The arrangement for measuring a fluid pressure according to one of claims 5 to 10, wherein
- ambient atmospheric pressure prevails outside of the second and/or third collar (22, 24).

12. The arrangement for measuring a fluid pressure according to one of claims 5 to 11, wherein
- the pressure sensor portion and/or at least individual portions of the first, second or third collars (20, 22, 24) have a cylindrical or conical, preferably circular cylindrical or circular conical shape.

13. The arrangement for measuring a fluid pressure according to one of claims 5 to 12, wherein
- seals (30, 32), which are disposed between the first collar (20) and the second collar (22) or between the first collar (20) and the third collar (24), are such that during operation they behave like a fluid when they are applied against the appropriate surfaces (16b, 18b) of the pressure sensor portion (10).

14. The arrangement for measuring a fluid pressure according to one of the preceding claims, wherein
- a pressure sensor portion (10) is an elongate body with, in relation to its longitudinal axis (L), laterally protruding surfaces (16a, 16b, 18a, 18b), wherein the sum of, relative to the longitudinal axis (L), orthogonal projections of surfaces (16a), which are oriented substantially in a first direction and during operation are wetted by fluid, the pressure of which is to be measured, is substantially equal to or less than the sum of, relative to the longitudinal axis, orthogonal projections of surfaces (18a), which are oriented substantially in a second direction opposed to the first direction and during operation are wetted by fluid, the pressure of which is to be measured.

## Revendications

1. Dispositif de mesure de pression de fluide, comportant
- un élément (10), qui est conçu pour être placé
- dans un évidement (12) ouvert au moins sur un côté, l'élément (10) devant être dimensionné par rapport à l'évidement (12) de telle façon que
- l'élément (10) soit entouré par un espace intermédiaire (14) pour la réception de fluide, espace intermédiaire auquel est associée une arrivée de fluide disposée dans une paroi de l'évidement (12),
- des premières et deuxièmes surfaces (16a, 16b, 18a, 18b), situées sur l'élément (10) et touchées par le fluide, étant dimensionnées et orientées de telle façon que des forces exercées par la pression de fluide sur les premières surfaces (16a, 18a) et exerçant une contrainte sur l'élément (10) en direction du côté ouvert de l'évidement (12), ont la même intensité ou sont de plus faible intensité que des forces, exercées par la pression de fluide sur les deuxièmes surfaces (16b, 18b) et exerçant une contrainte éloignant l'élément (10) du côté ouvert de l'évidement (12),
- l'élément (10) recevant un détecteur de pression (26).

2. Dispositif de mesure de pression de fluide suivant la revendication 1,
- la première et la deuxième surface (16a, 18a), situées sur l'élément (10) du détecteur de pression et touchées par le fluide, étant dimensionnées et orientées de telle façon que des forces, exercées par la pression de fluide sur les premières surfaces (16a, 18a) et exerçant une contrainte sur l'élément (10) du détecteur de pression en direction du côté ouvert de l'évidement (12), ont la même intensité que des forces exercées par la pression de fluide sur les deuxièmes surfaces (16b, 18b) et exerçant une contrainte éloignant l'élément (10) du détecteur de pression du côté ouvert de l'évidement (12).

3. Dispositif de mesure de pression de fluide suivant la revendication 2, **caractérisé en ce que** les premières surfaces (16a, 18a) et les deuxièmes surfaces (16b, 18b) sont symétriques l'une de l'autre, par rapport à un plan médian (M).

4. Dispositif de mesure de pression de fluide suivant l'une des revendications précédentes,
- l'élément (10) du détecteur de pression ayant, dans une zone médiane, une première collerette (20) comportant une surface périphérique essentiellement fermée, une première surface de recouvrement (16a) et une deuxième surface de recouvrement (18a), la première surface de recouvrement (16a) et la deuxième surface de recouvrement (18a) ayant, relativement à un plan médian (M), des aires de surface de projection essentiellement égales.

5. Dispositif de mesure de pression de fluide suivant la revendication précédente,
- une deuxième et une troisième collerette (22, 24) étant chacune disposées à des distances axiales par rapport à la première et à la deux surface de recouvrement (16a, 18a) de la première collerette (20), les dimensions extérieures des deuxième et troisième collerettes (22, 24) étant telles que la deuxième et la troisième collerette contribuent au guidage de l'élément (10) de détecteur de pression dans l'évidement (12) et présentent chacune des surfaces de recouvrement (16b, 18b), tournées vers la première collerette (20), qui ont, relativement à un plan médian (M), des aires de surfaces de projection essentiellement égales.

6. Dispositif de mesure de pression de fluide suivant la revendication précédente,
- un joint d'étanchéité (30, 32) étant chaque fois disposé entre la première collerette (20) et la deuxième collerette (22), et/ou entre la première collerette (20) et la troisième collerette (24).

7. Dispositif de mesure de pression de fluide suivant l'une des revendications précédentes,
- l'élément (10) du détecteur de pression étant maintenu dans l'évidemen (12) par un moyen de maintien, de préférence un circlips (36).

8. Dispositif de mesure de pression de fluide suivant l'une des revendications 4 à 7,
- l'élément (10) du détecteur de pression étant disposé dans l'évidemen (12) de telle façon que la première collerette (20) est tournée vers l'arrivée de fluide disposée dans la paroi de l'évidement (12).

9. Dispositif de mesure de pression de fluide suivant l'une des revendications précédentes,
- l'élément (10) du détecteur de pression présentant une structure à symétrie de révolution par rapport à son axe médian (L).

10. Dispositif de mesure de pression de fluide suivant l'une des revendications 4 à 9,
- l'élément (10) du détecteur de pression présentant le détecteur de pression (26) dans la zone de la première collerette (20).

11. Dispositif de mesure de pression de fluide suivant l'une des revendications 5 à 10, dans lequel
- il règne, à l'extérieur de la deuxième et/ou de la troisième collerette (22, 24), la pression atmosphérique de l'environnement.

12. Dispositif de mesure de pression de fluide suivant l'une des revendications 5 à 11,
- l'élément du détecteur de pression et/ou au moins différentes parties de la première, de la deuxième ou de la troisième collerette (20, 22, 24) présentant une forme cylindrique ou conique, de préférence, cylindrique circulaire ou conique circulaire.

13. Dispositif de mesure de pression de fluide suivant l'une des revendication 5 à 12,
- des joints d'étanchéité (30, 32) placés entre la première collerette (20) et la deuxième collerette (22), ou entre la première collerette (20) et la troisième collerette (24), étant conçus de telle façon qu'ils se comportent, en fonctionnement, comme un fluide quand ils s'appuient, sur l'élément (10) du détecteur de pression, contre les surfaces correspondantes (16b, 18b).

14. Dispositif de mesure de pression de fluide suivant l'une des revendications précédentes,
- un élément (10) du détecteur de pression étant un corps allongé comportant des surfaces (16a, 16b, 18a, 18b) à distance latéralement par rapport à son axe longitudinal (L), la somme des projections, orthogonales à l'axe longitudinale (L), des surfaces (16a) qui sont essentiellement orientées dans une première direction, et, en fonctionnement, sont baignées dans le fluide dont la pression est à mesurer, ayant essentiellement la même valeur, ou une valeur plus petite, que la somme des projections orthogonales à l'axe longitudinal, des surfaces (18a), qui sont essentiellement orientées dans une deuxième direction, opposée à la première direction, et qui, en fonctionnement, sont baignées dans le fluide dont la pression est à mesurer.
